# EUROPEAN PATENT SPECIFICATION

(11) **EP 3 004 026 B1**
(45) Date of publication and mention of the grant of the patent: **08.04.2020**
(21) Application number: 14730791.2
(22) Date of filing: 30.05.2014
(51) Int. Cl.: C04B 35/5831, C04B 35/63, C04B 35/645

(54) **METHOD FOR MAKING PCBN MATERIAL**
VERFAHREN ZUR HERSTELLUNG VON PCBN-MATETRIAL
PROCÉDÉ POUR LA FABRICATION DU MATÉRIAU PCBN

(30) Priority: 31.05.2013 GB 201309782
(43) Date of publication of application: 13.04.2016
(73) Proprietor: Element Six Limited, County Clare (IE)
(72) Inventor: SJÖGREN, Anna, 19523 Robertsfors (SE); NILSSON, Lars-Ivar, 19523 Robertsfors (SE)
(74) Representative: Rollinson, Gabrielle Mary Joy
(86) International application number: PCT/EP2014/061292
(87) International publication number: WO 2014/191567

(56) References cited:
- EP-A1- 1 359 130
- JP-A- H 061 666
- JP-A- 2007 169 107
- US-A1- 2008 286 558
- US-A1- 2010 069 225
- N. V. KIRILLOVA ET AL: "Synthesis of a high-boron aluminum boride via borothermic reduction of alumina", INORGANIC MATERIALS, vol. 36, no. 8, 1 August 2000 (2000-08-01) , pages 776-782, XP055136633, ISSN: 0020-1685, DOI: 10.1007/BF02758596

## Description

This disclosure relates to generally to PCBN material and tool elements comprising same, particularly but not exclusively for machining work-pieces comprising metal.

United States patent number 4,666,466 discloses an abrasive compact comprising a mass of cubic boron nitride (cBN) grains and a second phase bonded into a hard conglomerate, in which adjacent cBN grains are joined to each other to form an inter-grown mass. The cBN content of the compact is at least 80 per cent by weight and the second phase consisting essentially of aluminium nitride and or aluminium diboride. A method for making the compact is also disclosed, the method including placing a mass of cBN grains in contact with a mass of aluminium to form a reaction mass, placing the reaction mass in a reaction zone, raising the pressure of the reaction zone to a pressure in the range 5.0 to 6.5 gigapascals (GPa) and the temperature to within the range 1,400 to 1,600 degrees Celsius, for a time sufficient to produce a sintered compact.

United States patent number 8,148,282 discloses cubic boron nitride (cBN) composite comprising about 91 to 94 mass per cent cBN grains within an aluminium-based non-cBN matrix. During the sintering process, molten aluminium metal is allowed to react with the cBN grains until the aluminium is completely converted to AIN (aluminium nitride) and AlB₂ (aluminium diboride) in the resulting sintered compact. Other reaction products such as AlB₆ (aluminium hexaboride) and AlB₁₂ (aluminium dodecaboride) are possible in principle, which would have the effect of reducing the cBN content in the final compact and are described as being generally undesirable. It is disclosed that no evidence of these higher order aluminium borides was found.

US2008/286558 discloses a method of making cBN sintered ceramics. cBN powder with an average particle diameter of 2.5 microns is mixed with a binder powder mixture containing Co, Al and WC. This mixture was densified at 2050°C and 7.2 GPa . The ceramic is used as a tool for cutting cast iron.

JPH061666 discloses a method of making cBN sintered ceramics using a starting mixture containing cBN grains, Al grains and an oxide. Sintering takes place at for instance 1600°C and 5.0 GPa.

US2010069225 discloses mixing only cBN powder with Al grains. Sintering takes place at 4-8 GPa and 1000-2000°C. The Al is converted to AIN and AIB2. AIB6 and AIB12 can also be present.

EP1359130 discloses mixing cBN powder (in an amount of 54 wt%) with 8 wt% Al grains, and also other powders, such as TiN, TiC and WC-Co, and sintering this mixture at 1500°C and 4.5 GPa.

There is a need for PCBN material and tools comprising PCBN material and having a good working life or performance in use, particularly but not exclusively for machining bodies comprising cast iron.

In the invention, there is provided a method of making PCBN material, the PCBN material comprising at least 30 volume per cent cubic boron nitride (cBN) grains bonded together by a matrix consisting essentially of aluminium nitride and a plurality of regions comprising boron and aluminium atoms, in which regions there are at least 15 times more boron atoms than aluminium atoms present, the regions comprising an aluminium boride phase of the inorganic chemical formula AlₓB_{y}, in which x is 1 and y has a mean value selected from any of the ranges 16 to 16.5 and 24 to 26, the method including a pre-sinter compact consisting of an aggregation consisting of a plurality of cBN grains, and a source of aluminium in the form of grains of Al metal blended with the cBN grains comprised in the aggregation or of a body such as a disc in contact with the aggregation, the source being selected and arranged in relation to the aggregation such that molten aluminium will be available to contact the cBN grains at a mean sinter temperature of about 1,650 degrees Celsius and a sinter pressure of about 5 gigapascals (GPa), subjecting the pre-sinter compact to the sinter temperature and sinter pressure for sufficient sinter period for the aluminium to react with the cBN grains to the extent that there remains substantially no non-reacted aluminium between the cBN grains and to provide a sintered PCBN structure, the sinter pressure and sinter temperature selected such that substantially no hexagonal boron nitride (hBN) arises in the sintered PCBN structure; and then decreasing the temperature and pressure to an ambient condition; the amount and size distribution of the cBN grains comprised in the aggregation being such that the content of the cBN grains in the PCBN material will be at least 30 volume per cent. In other words, the atomic ratio of the boron to the aluminium atoms present in the regions will be at least 15. The regions may also be referred to as 'boron-rich' regions.

Various forms, compositions, microstructures and arrangements of PCBN material are envisaged by the disclosure, non-limiting, non-exhaustive examples of which are described below.

In some examples, there may be at most about 30 or at most about 25 times more boron atoms than aluminium atoms present in the (boron-rich) regions.

The (boron-rich) regions may be said to be present in the PCBN material in the form of aluminium boride grains, which may be located interstitially, within the interstitial regions between the cBN grains. In some example microstructure arrangements, the cBN grains and the aluminium boride grains may be said to be dispersed within cementing material comprising or substantially consisting of aluminium nitride.

The values of x and or y may be mean values throughout a volume of the (boron-rich) regions. The aluminium boride phase may be selected from one or more of aluminium hexadecaboride (AlB₁₆) or aluminium pentacostaboride (AlB₂₅), in stoichiometric, or sub- or super-stoichiometric form.

In some examples, the (boron-rich) regions may be substantially amorphous or they may be substantially crystalline.

In some examples, the cBN content may be at least 70 volume per cent, at least 80 volume per cent or at least 90 volume per cent of the PCBN material. In some examples, the cBN content may be at most 96 volume per cent of the PCBN material.

In some examples, the content of the aluminium boride phase may be at least 1 weight per cent or at least 10 weight per cent of the PCBN material.

In some examples, the cBN grains may have a mean size of at least 0.5 microns; in some examples, the cBN grains may have a mean size of at most 10 microns, at most 8 microns or at most 5 microns. In some examples, the area distribution of cBN grains exposed at a surface of the PCBN material as a function of cBN grain size may include more than one mode.

In some examples, the PCBN material may contain less than 2 weight per cent or less than 1 weight per cent aluminium diboride (AlB₂), or it may be substantially free of aluminium diboride. There may be substantially no peak corresponding to aluminium diboride in an XRD trace of the PCBN material, within a detection limit of about 1 weight per cent.

In some examples, the (boron-rich) regions may appear in the form of microscopic grains substantially embedded within aluminium nitride material. Most or substantially all of the (boron-rich) regions may be separated from the cBN grains by cementing material comprising aluminium nitride. In some examples, less than about 10 per cent or less than about 5 per cent of the boundary path length of the (boron-rich) regions may be in contact with cBN material, when a surface of the PCBN material is viewed by microscope means; and in some examples, substantially no part of the boundary of the (boron-rich) regions may contact boundaries of the cBN grains. Most or substantially all of the surface area of the cBN grains and or of the (boron-rich) regions may be bonded to aluminium nitride material.

In some examples, the (boron-rich) regions may have a mean size of at most about 20 microns or at most about 10 microns, in terms of the distribution of segment lengths through the boron-rich regions visible on a surface of the PCBN material. The equivalent circle area distribution of the boron-rich regions as a function of segment lengths through the regions may include more than one mode. A first mode in the size distribution of the (boron-rich) regions may be at most about 5 microns or at most about 1 micron, and a second mode of the (boron-rich) regions may be greater than 5 microns.

In some examples, the PCBN material may have porosity less than 1 per cent or may be substantially free of porosity.

In some examples, the PCBN material may have microstructural composition and arrangement such that the mean speed of sound through the PCBN material is at least 14,500 metres per second (m/s), at least 14,700 m/s or at least 15,000 m/s. While wishing not to be bound by a particular theory, the speed of sound through PCBN material may provide an indication of certain aspects of its microstructure, material composition and or the strength of the bonding between the cBN grains and the binder matrix. In some examples, the speed of sound may provide an indication of the potential effectiveness of PCBN material for certain applications. In general, a relatively higher speed of sound through PCBN material may indicate that it is potentially of high quality.

In some examples, a relatively high contiguity among the cBN grains may be evident, in which a higher proportion of the cBN grain boundaries involve direct contact between cBN grains. In other words, a higher proportion of the specific surface area of the cBN grain boundaries may be associated with direct or adjacent contact between cBN grains. This microstructural arrangement may give rise to the increased speed of sound through example PCBN material according to this disclosure.

Variations of the method are envisaged by the disclosure, of which the following are non-limiting and non-exhaustive examples.

In some examples, the sinter period may be at least 30 seconds, at least 1 minute, at least 5 minutes, at least about 15 minutes or at least about 30 minutes. In general, longer sinter periods may be used to sinter larger volumes of the PCBN material and relatively short sinter periods may be used to sinter smaller volumes of PCBN material.

In some examples, the mass distribution as a function of equivalent circle diameter (ECD) grain size of the cBN grains comprised in the aggregation may include more than one mode.

In some examples, the mean size of the cBN grains comprised in the aggregation may be at most about 10 microns or at most about 5 microns.

Non-limiting examples will be described with reference to the accompanying drawings, of which
Fig. 1 shows a schematic microscopic view of a surface of example PCBN material (a 1 micron scale bar is provided);
Fig. 2 shows an example cutter insert comprising example PCBN material joined to a substrate, and
Fig. 3 shows an example cutter insert comprising example PCBN material.

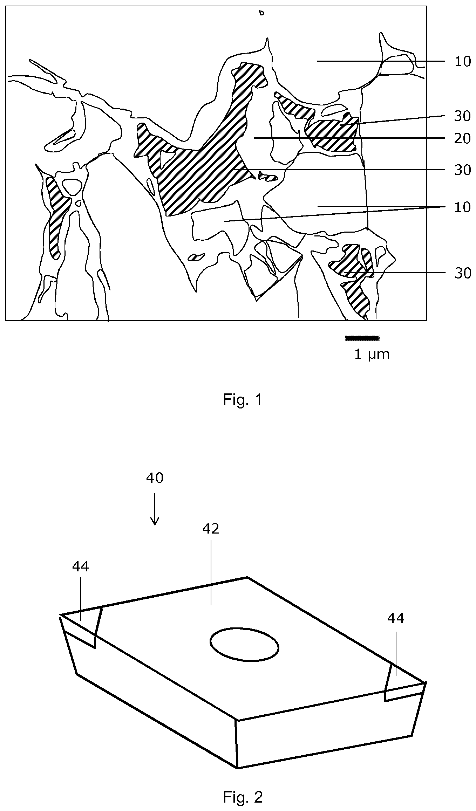

With reference to Fig. 1, example PCBN material comprises cBN grains 10 and boron-rich regions 30 cemented together within a matrix 20 comprising aluminium nitride. Apart from practically unavoidable impurities and potentially a minor amount of aluminium diboride (not shown in Fig. 1), the matrix 20 may substantially consist of aluminium nitride. Relatively much smaller boron-rich regions not shown in the illustration and having a mean size of less than 1 or 2 microns, may be dispersed within the matrix between the larger boron-rich regions 30 and the cBN grains 10, which are shown. The boron-rich regions 30 are likely to be substantially amorphous and may comprise or consist of aluminium hexadecaboride (AlB₁₆) and / or aluminium pentacostaboride (AlB₂₅), in stoichiometric or super-stoichiometric form. For example, the boron-rich regions 30 may comprise or consist of AlB_{16.3} according to energy dispersive X-ray spectroscopy (EDS) spot analysis. The boron-rich regions 30 may appear to be separated from the cBN grains by the aluminium nitride matrix 20, and located near the centres of the interstitial regions between the cBN grains 10. Less than 10 per cent or substantially none of the path length along the boundaries or the boron-rich regions 30 as viewed on a polished surface of the example PCBN material appears to contact a cBN grain 10.

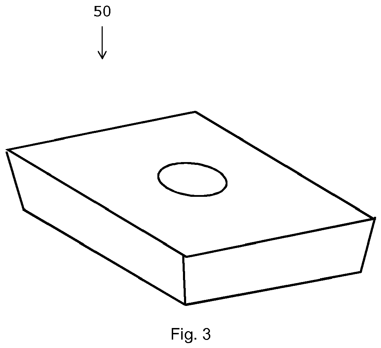

With reference to Fig. 2, an example indexable cutter tool 40 may comprise a plurality of example PCBN cutter elements 44 brazed to a cemented carbide substrate 42. With reference to Fig. 3, an example cutter tool element 50 for a machine tool may be formed of example PCBN material that is not bonded to a substrate.

Non-limiting examples are described below in order to illustrate the disclosed methods and resulting materials.

All of the example and control PCBN samples were made by a method including preparing respective pre-sinter assemblies by compacting raw material aggregations to form compacted discs encapsulated within cups of a refractory material, which were assembled into a capsule for sintering PCBN material and subjected to a sinter pressure and a sinter temperature for a sinter time. In all cases, the control PCBN material was sintered at a sinter pressure of about 4 gigapascals (GPa) and a sinter temperature of about 1,250 degrees Celsius for a sinter period of about 30 minutes.

The speeds of sound in the example and control PCBN elements were measured by means of an ultra-sound technique. The speed of sound in the PCBN material is believed to provide an indication of the contiguity of the cBN grains and other phases present in which the speed or sound is relatively high. Relatively higher speeds of sounds are believed to indicate potentially superior wear resistance of ceramic materials. The speed of sound is measured by means of a scanning accoustograph device, which records the speed of longitudinal compression waves in a solid body.

The control and example PCBN materials were analysed using X-ray diffraction (XRD). The control and example PCBN material were also analysed using spot energy dispersive X-ray spectroscopy (EDS), in which the spot diameter was at most about 1 micron. The EDS measurement permitted the atomic ratio of boron to aluminium to be measured at various points on the surfaces of the materials, including within the boron-rich regions.

In all Examples described below, the example PCBN materials made according to this disclosure were found to comprise (cBN) grains bonded together by a matrix comprising aluminium nitride and regions comprising boron and aluminium atoms, in which regions there are about 15 times more boron atoms than aluminium atoms present.

### Examples 1 and 2

Two different example PCBN materials were made and compared to a control PCBN material in terms of microstructure, composition, the speed of sound through the material and the behaviour of the material in a turning test. Two respective cutter elements consisting of each of the example PCBN materials were prepared by cutting structures from respective sintered PCBN discs and processing the structures to provide them with cutting edges. A cutter element was prepared in the same way from a sintered disc consisting of a control PCBN material.

The PCBN discs were made by blending cBN grains with aluminium (Al) powder having a mean grain size of about 6 microns, the mass content of the cBN being about 90 per cent of the blended powders and the balance consisting of the Al powder. The cBN grains for both the control and example materials were provided from the same source and had a mean size in the range of 3 to 8 microns, in terms of equivalent circle diameter (ECD) as measured by laser diffractometric means. The raw material aggregations used in each of Examples 1, 2 and 3 as well as the control material were provided from the same source. Respective aggregations comprising the cBN grains and aluminium powder were prepared in the form of compacted discs encapsulated within cups of a refractory material, which were assembled into a capsule for sintering PCBN material and subjected to a sinter pressure and a sinter temperature for a sinter time.

Both of the Example 1 and 2 PCBN discs were sintered at a sinter pressure of about 5 gigapascals (GPa), a mean sinter temperature of about 1,650 degrees Celsius (a maximum temperature of about 1,710 degrees Celsius might have been reached) - i.e. about 400 degrees Celsius higher than that used to make the control material - and two different respective sinter periods of about 15 and 47 minutes. The sinter pressure had been increased in order to compensate thermodynamically for the increase in the sinter temperature.

The cBN content in the sintered discs was about 85 mass per cent, the difference between the mass content in the pre-sinter aggregation and in the sintered disc arising substantially from the dissolution of the grains in the aluminium and the subsequent formation of aluminium nitride.

The Example 1 and the control PCBN material were compared by using them to machine grey cast iron suitable for brake discs. Cutter elements comprising each were made by cutting corresponding structures from respective PCBN discs and processing the structures to provide them with cutting edges. The 'flank wear' of the Example 1 and control PCBN elements were measured after turning 600 passes, corresponding to about 70 minutes of turning. The flank wear is measured in terms of the size Vb of the wear scar in millimetres (mm) formed on the cutter element during the test.

In the machining test, the mean flank wear on the Example 1 cutter element was about 0.058 millimetres, which was substantially better than the mean flank wear of about 0.11 millimetres (mm) of the control cutter element, the standard deviation being about 0.002 millimetres. In other words, the wear scars of the Example 1 and 2 PCBN elements were about 40 per cent less than that of the control PCBN element.

The speeds of sound of the Example 1 and 2 PCBN materials were about 15,050 metres per second (m/s) and that of the control PCBN material was in the range of 13,600 to 14,350 metres per second (m/s).

The control and Example 1 and 2 PCBN materials were analysed using X-ray diffraction (XRD) and whilst a clear peak corresponding to aluminium diboride was evident in the control sample, there was no evidence of aluminium diboride in the Example 1 and 2 PCBN material within the detection limit estimated to be at most about 1 weight per cent.

### Example 3

Example 3 PCBN material was made in substantially the same was as the Example 1 and 2 PCBN materials, except that the sinter period was 27 minutes.

The mean flank wear on the Example 3 cutter element was about 0.058 millimetres, which was substantially better than the mean flank wear of about 0.11 millimetres (mm) of the control cutter element, the standard deviation being about 0.002 millimetres. In other words, the wear scar of the Example 3 PCBN element was about 40 per cent less than that of the control PCBN element.

The speed of sound of the Example 3 PCBN material was about 15.05 to 15.19 metres per second (m/s) and that of the control PCBN material being in the range of 13,60 to 14,35 metres per second (m/s).

The XRD measurement of the control material exhibited a clear peak corresponding to aluminium diboride peak, but there was no evidence of aluminium diboride in the Example 3 PCBN material within the detection limit estimated to be at most about 1 weight per cent.

### Examples 4 and 5

Examples 4 and 5 differ from each other only in that the sinter periods used to make the PCBN material were 20 and 47 minutes respectively.

Raw material aggregations were made by blending cBN grains with aluminium (Al) powder having a mean grain size of about 6 microns, the mass content of the cBN being about 91 per cent of the blended powders and the balance consisting of the Al powder. The cBN grains for both the control and Example 4 and 5 materials had been provided from a single plurality of crushed cBN grains having a mean size of about 1 to 5 microns, in terms of equivalent circle diameter (ECD) as measured by laser diffractometric means. The raw material aggregations used in each of Examples 4 and 5 as well as the control material were provided from the same source.

The speeds of sound of the Example 4 and 5 PCBN materials were about 15.20 and 15.26 metres per second (m/s) and the XRD measurement exhibited no AlB₂ peaks and a sharpening of the AIN peaks.

### Example 6 and 7

Examples 6 and 7 differ from each other only in that the sinter periods used to make the PCBN materials were 20 and 47 minutes respectively.

Raw material aggregations were made by blending cBN grains with aluminium (Al) powder having a mean grain size of about 6 microns, the mass content of the cBN being about 87 per cent of the blended powders and the balance consisting of the Al powder. The cBN grains for both the control and example materials had been provided by combining five pluralities of crushed cBN grains, each plurality having a different mean size and equal masses. The cBN grains used in each of Examples 6 and 7, as well as the control material were provided from the same source.

The speeds of sound of the Example 6 and 7 PCBN materials were about 14.79 and 14.18 metres per second (m/s), and peaks corresponding to aluminium diboride were not evident in the XRD measurements, which exhibited sharpening of the AIN peaks.

The cBN contents, sinter periods, approximate sinter temperature, flank wear (for Example 1 and its corresponding control material) and speed of sound in the Example 1 to 7 PCBN materials are summarised in Table 1 below.

**Table 1**

| *Example no.* | *Solvent material (liquid phase)* | *cBN: solvent mass ratio* | *Sinter period, min.* | *Sinter temp.* °C | *Flank wear, micron* | *Speed of sound, m*/*s* |
|---|---|---|---|---|---|---|
| 1 | Al | 90 : 10 | 15 | 1,650 | 0.058 | 15.1 |
| 2 | Al | 90 : 10 | 47 | 1,650 | | 15.2 |
| 3 | Al | 90 : 10 | 27 | 1,650 | | 15.2 |
| Control A | Al | 90 : 10 | 30 | 1,250 | 0.11 | 13.6-14.4 |
| 4 | Al | 91 : 9 | 20 | 1,650 | | 15.2 |
| 5 | Al | 91 : 9 | 47 | 1,650 | | 15.2 |
| Control B | Al | 91 : 9 | 30 | 1,250 | | 13.6-14.4 |
| 6 | Al | 87 : 13 | 20 | 1,650 | | 14.8 |
| 7 | Al | 87 : 13 | 47 | 1,650 | | 14.2 |
| Control C | Al | 87 : 13 | 30 | 1,250 | | 14.1 - 14.7 |

While wishing not to be bound by a particular theory, aluminium boride compounds comprising several boron atoms for each aluminium atom may form less readily than aluminium nitride and it may be that the melting point temperature of aluminium boride compounds increases as the ratio of boron to aluminium atoms increases. So, for example, there may be a range of temperatures (for a given pressure) at which a boron-rich region may remain in the solid state while an adjacent region comprising a lower ratio of boron to aluminium would be in a molten state. In the particular context of a process of making certain PCBN material as previously described, aluminium from the aluminium source may melt as the temperature is increased past its melting point and infiltrate into the cBN aggregation, occupying the interstices between the cBN grains and wetting their surfaces. This process may be accelerated as a result of the applied ultra-high pressure. Boron and nitrogen from the surfaces of the cBN grains will likely dissolve in some form into the molten aluminium and diffuse away from the cBN grains into the interstitial regions. Regions of solid aluminium nitride will likely begin to precipitate and grow where the ratio of boron to aluminium locally is suitable. If the temperature is sufficiently high, boron-rich regions may continue to remain in the liquid state as the aluminium nitride phase progressively extends from the cBN grains, leaving molten boron rich volumes near the centres of the interstitial regions, relatively remote from the cBN grains and separated from them by the aluminium nitride. When the temperature is reduced, the material in the boron-rich volume will solidify to form volumes of solid, potentially amorphous boron-rich grains comprising material in which the ratio of boron to aluminium atoms is at least about 15 or 16, or about 24 to 26 as measured by spot EDS. If the above hypothesis is correct, it may be expected that higher sinter temperatures may result in higher ratios of y to x (i.e. a higher ratio of boron atoms to aluminium atoms). For example, the boron-rich grains may appear in electron backscatter spot analysis as substantially stoichiometric or non-stoichiometric aluminium hexadecaboride or aluminium pentacotsaboride. Additionally, relatively longer sinter times may result in less finely dispersed boron-rich material within the aluminium nitride cementing material, since longer sinter times may likely allow more of the boron to diffuse through the aluminium nitride and combine with the relatively large boron-rich regions relatively remote from the cBN grains (the boron may diffuse through the aluminium nitride in the form of the compound aluminium diboride).

Whille wishing not to be bound by a particular theory, it may be hypothesised that the presence of the microscopic grains of boron-rich aluminium boride phases within a substantially aluminium nitride matrix between the cBN grains may have the effect of strengthening the matrix and making it more resistant to abrasive wear, or some other advantageous effect. For example, in one hypothesis, their presence may result in the formation of a thin film of glassy boron oxide phase on part of the surface of the PCBN material, such as over the cBN grains, when the PCBN material is used to machine a work-piece. Such machining often generates substantial heat on the PCBN cutting edge, which may result in the oxidation of some of the boron and the resulting boron oxide material may be in a molten or plastic state at or adjacent the cutting edge. This may have the effect of lubricating the cutting edge and work-piece to some extent during the machining process, and or it may enhance the machining process in some way.

Certain terms and concepts as used herein are briefly explained below.

A machine tool is a powered mechanical device, which may be used to manufacture components comprising materials such as metal, composite materials, wood or polymers by machining, which is the selective removal of material from a body, called a work-piece. A cutter insert may be attached to a machine tool to engage and cut the work-piece. A rake face of a cutter insert is the surface or surfaces over which the chips from the work-piece flow, the rake face directing the flow of newly formed chips. Chips are the pieces of a body removed from the work surface of the body by a machine tool in use. The flank of a cutter insert is the surface that passes over the machined surface produced on the body by the cutter insert. The flank may provide a clearance from the body and may comprise more than one flank face. A cutting edge is the edge of a rake face intended to perform cutting of a body.

In rough machining operations, the feed rate and depth of cut are relatively high and the load on the cutting edge of the tool is high, often in the range of about 5 to 10 kN (kilonewtons). Rough machining is frequently undertaken on work-pieces which include an "interrupt" aspect, which may be intentional or unintentional. For example, an interrupt may be in the form of a "V" groove or porosity from gases evolved during casting, slag or sand particles. In rough machining, dimensional tolerance is not as critical as in finishing operations and flank wear values up to and in excess of 1 mm may be permitted. Consequently, it is likely that chip resistance rather than wear is the dominant failure mode in rough machining.

As used herein, a material that "substantially consists of" certain constituents means that the material consists of the constituents apart from minor amounts of practically unavoidable impurities.

As used herein, references to atoms are to the presence of any isotope of the corresponding atomic nuclei, regardless of whether the atom is in ionic or neutral form, or whether the atom is bonded to one or more other atoms in a chemical compound.

As used herein, a mode of a distribution is a local maximum value, occurring more frequently in the data than do other values within a range including the mode. Visually, a mode in a size distribution graph will be evident as a peak. For example, in a mono-modal distribution, only one peak is evident and there are no local maxima, or only very minor and insubstantial other peaks; in a bi-modal distribution, there are two and only two peaks evident, one of which may be a global maximum and the other may be a local maximum, or both may be substantially equal in frequency. In general, multi-modal distributions comprise at least two modes.

## Claims

1. A method of making PCBN material, the PCBN material comprising at least 30 volume per cent cubic boron nitride (cBN) grains bonded together by a matrix consisting essentially of aluminium nitride and a plurality of regions comprising boron and aluminium atoms, in which regions there are at least 15 times more boron atoms than aluminium atoms present, the regions comprising an aluminium boride phase of the inorganic chemical formula AlₓB_{y}, in which x is 1 and y has a mean value selected from any of the ranges 16 to 16.5 and 24 to 26, the method including a pre-sinter compact consisting of an aggregation consisting of a plurality of cBN grains, and a source of aluminium in the form of grains of Al metal blended with the cBN grains comprised in the aggregation or of a body such as a disc in contact with the aggregation, the source being selected and arranged in relation to the aggregation such that molten aluminium will be available to contact the cBN grains at a mean sinter temperature of about 1,650 degrees Celsius and a sinter pressure of about 5 gigapascals (GPa), subjecting the pre-sinter compact to the sinter temperature and sinter pressure for sufficient sinter period for the aluminium to react with the cBN grains to the extent that there remains substantially no non-reacted aluminium between the cBN grains and to provide a sintered PCBN structure, the sinter pressure and sinter temperature selected such that substantially no hexagonal boron nitride (hBN) arises in the sintered PCBN structure; and then decreasing the temperature and pressure to an ambient condition; the amount and size distribution of the cBN grains comprised in the aggregation being such that the content of the cBN grains in the PCBN material will be at least 30 volume per cent.

2. A method as claimed in claim 1, in which the mass distribution as a function of grain size of the cBN grains comprised in the aggregation includes more than one mode.

3. A method as claimed in any one of the preceding claims, wherein the regions of the PCBN material are substantially amorphous.

4. A method as claimed in any one of the preceding claims, wherein the regions of the PCBN material comprise an aluminium boride phase, the content of which is at least 1 weight per cent.

5. A method as claimed in any one of the preceding claims, wherein the cBN grains of the PCBN material have a mean size of at least 0.5 microns and at most 10 microns.

6. A method as claimed in any one of the preceding claims, wherein the mass distribution of cBN grains as a function of cBN grain size includes more than one mode.

7. A method as claimed in any one of the preceding claims, wherein the PCBM material is substantially free of aluminium diboride.

8. A method as claimed in any one of the preceding claims, wherein the regions of the PCBN material are separated from the cBN grains by matrix material comprising aluminium nitride.

9. A method as claimed in any one of the preceding claims, wherein the PCBN material has porosity less than 1 per cent.

## Patentansprüche

1. Verfahren zum Herstellen von PCBN-Material, das mindestens 30 Volumenprozent Körner aus kubischem Bornitrid (cBN) umfasst, die mittels einer Matrix aneinander gebunden sind, welche im Wesentlichen aus Aluminiumnitrid und einer Vielzahl von Regionen besteht, die Bor- und Aluminiumatome umfassen, wobei in den Regionen mindestens 15 Mal mehr Boratome als Aluminiumatome vorhanden sind, wobei die Regionen eine Aluminiumboridphase mit der anorganischen chemischen Formel AlₓB_{y} umfassen, in der x 1 ist und y einen mittleren Wert ausgewählt aus beliebigen der Bereiche 16 bis 16,5 und 24 bis 26 aufweist,
wobei das Verfahren einen Vorsinterpresskörper einschließt, der aus einer Aggregation besteht, die aus einer Vielzahl von cBN-Körnern und einer Quelle für Aluminium in Form von Körnern aus Al-Metall, die mit den cBN-Körnern vermischt sind, die in der Aggregation enthalten sind, oder von einem Körper besteht wie einer Scheibe in Kontakt mit der Aggregation, wobei die Quelle in Bezug zu der Aggregation ausgewählt und angeordnet ist, so dass geschmolzenes Aluminium verfügbar sein wird, um bei einer mittleren Sintertemperatur von etwa 1650 Grad Celsius und einem Sinterdruck von etwa 5 Gigapascal (GPa) in Kontakt mit den cBN-Körnern zu kommen, wobei der Vorsinterpresskörper der Sintertemperatur und dem Sinterdruck für einen ausreichenden Sinterzeitraum ausgesetzt wird, damit das Aluminium bis zu dem Maß mit den cBN-Körnern reagieren kann, damit im Wesentlichen kein nicht-umgesetztes Aluminium zwischen den cBN-Körnern verbleibt, und damit eine gesinterte PCBN-Struktur bereitgestellt wird, wobei der Sinterdruck und die Sintertemperatur so ausgewählt werden, dass im Wesentlichen kein hexagonales Bornitrid (hBN) in der gesinterten PCBN-Struktur aufkommt, und wobei danach die Temperatur und der Druck auf eine Umgebungsbedingung herabgesetzt werden, wobei die Menge und Größenverteilung der cBN-Körner, die in der Aggregation enthalten sind, derart sind, dass der Gehalt der cBN-Körner in dem PCBN-Material mindestens 30 Volumenprozent beträgt.

2. Verfahren nach Anspruch 1, bei dem die Massenverteilung als Funktion der Korngröße der cBN-Körner, die in dem Aggregat enthalten sind, mehr als einen Modus einschließt.

3. Verfahren nach einem der vorhergehenden Ansprüche, bei dem die Regionen des PCBN-Materials im Wesentlichen amorph sind.

4. Verfahren nach einem der vorhergehenden Ansprüche, bei dem die Regionen des PCBN-Materials eine Aluminiumboridphase umfassen, deren Gehalt mindestens 1 Gewichtsprozent beträgt.

5. Verfahren nach einem der vorhergehenden Ansprüche, bei dem die cBN-Körner des PCBN-Materials eine mittlere Größe von mindestens 0,5 Mikrometern und höchstens 10 Mikrometer aufweisen.

6. Verfahren nach einem der vorhergehenden Ansprüche, bei dem die Massenverteilung der cBN-Körner als Funktion der cBN-Korngröße mehr als einen Modus einschließt.

7. Verfahren nach einem der vorhergehenden Ansprüche, bei dem das PCBM-Material im Wesentlichen frei von Aluminiumdiborid ist.

8. Verfahren nach einem der vorhergehenden Ansprüche, bei dem die Regionen des PCBN-Materials durch Matrixmaterial, welches Aluminiumnitrid umfasst, von den cBN-Körnern getrennt sind.

9. Verfahren nach einem der vorhergehenden Ansprüche, bei dem das PCBM-Material eine Porosität von weniger als 1 Prozent aufweist.

## Revendications

1. Procédé de fabrication d'un matériau de PCBN, le matériau de PCBN comprenant au moins 30 pour cent en volume de grains de nitrure de bore cubique (cBN) liés conjointement par une matrice essentiellement constituée de nitrure d'aluminium et une pluralité de régions comprenant des atomes de bore et d'aluminium, lesdites régions contenant au moins 15 fois plus d'atomes de bore que d'atomes d'aluminium présents, les régions comprenant une phase de borure d'aluminium de formule chimique inorganique AlₓB_{y}, dans laquelle x est 1 et y a une valeur moyenne choisie dans l'une quelconque des plages de 16 à 16,5 et 24 à 26,
le procédé comprenant un compact de pré-frittage constitué d'une agrégation constituée d'une pluralité de grains de cBN, et d'une source d'aluminium sous la forme de grains de Al métallique mélangée avec les grains de cBN compris dans l'agrégation ou d'un corps tel qu'un disque en contact avec l'agrégation, la source étant choisie et agencée par rapport à l'agrégation de sorte que de l'aluminium fondu soit disponible pour entrer en contact avec les grains de cBN à une température de frittage moyenne d'environ 1 650 degrés Celsius et une pression de frittage d'environ 5 gigapascals (GPa), la soumission du compact de pré-frittage à la température de frittage et la pression de frittage pendant une durée de frittage suffisante pour que l'aluminium réagisse avec les grains de cBN à un degré tel qu'il ne reste sensiblement pas d'aluminium n'ayant pas réagi entre les grains de cBN et pour produire une structure de PCBN frittée, la pression de frittage et la température de frittage étant choisies de sorte que sensiblement aucun nitrure de bore hexagonal (hBN) ne soit formé dans la structure de PCBN frittée ; et ensuite la diminution de la température et de la pression à une condition ambiante ; la quantité et la distribution de taille des grains de cBN compris dans l'agrégation étant telles que la teneur des grains de cBN dans le matériau de PCBN soit au moins 30 pour cent en volume.

2. Procédé selon la revendication 1, dans lequel la distribution de masse en fonction de la taille de grain des grains de cBN compris dans l'agrégation ne comprend pas plus d'un mode.

3. Procédé selon l'une quelconque des revendications précédentes, dans lequel les régions du matériau de PCBN sont sensiblement amorphes.

4. Procédé selon l'une quelconque des revendications précédentes, dans lequel les régions du matériau de PCBN comprennent une phase de borure d'aluminium, dont la teneur est au moins 1 pour cent en poids.

5. Procédé selon l'une quelconque des revendications précédentes, dans lequel les grains de cBN du matériau de PCBN ont une taille moyenne d'au moins 0,5 micron et au plus 10 microns.

6. Procédé selon l'une quelconque des revendications précédentes, dans lequel la distribution de masse de grains de cBN en fonction de la taille de grain de cBN comprend plus d'un mode.

7. Procédé selon l'une quelconque des revendications précédentes, dans lequel le matériau de PCBM est sensiblement exempt de diborure d'aluminium.

8. Procédé selon l'une quelconque des revendications précédentes, dans lequel les régions du matériau de PCBN sont séparées des grains de cBN par un matériau de matrice comprenant du nitrure d'aluminium.

9. Procédé selon l'une quelconque des revendications précédentes, dans lequel le matériau de PCBN a une porosité inférieure à 1 pour cent.
